# EUROPÄISCHE PATENTSCHRIFT

(11) **EP 4 136 044 B1**
(45) Veröffentlichungstag und Bekanntmachung des Hinweises auf die Patenterteilung: **13.11.2024**
(21) Anmeldenummer: 22726397.7
(22) Anmeldetag: 27.04.2022
(51) Int. Cl.: B65G 1/04

(54) **REGALANLAGE MIT REGALINTEGRIERTEM FLUCHTWEG**
SHELVING SYSTEM WITH AN ESCAPE ROUTE INTEGRATED INTO THE SHELVING
SYSTÈME DE RAYONNAGE COMPORTANT UNE VOIE DE SECOURS INTÉGRÉE AU RAYONNAGE

(30) Priorität: 04.05.2021 DE 102021111497
(43) Veröffentlichungstag der Anmeldung: 22.02.2023
(73) Patentinhaber: SSI Schäfer Automation GmbH (DE), 97232 Giebelstadt (DE)
(72) Erfinder: WEBER, Lukas, 97877 Wertheim-Bettingen (DE)
(74) Vertreter: Witte, Weller & Partner Patentanwälte mbB
(86) Internationale Anmeldenummer: PCT/EP2022/061255
(87) Internationale Veröffentlichungsnummer: WO 2022/233681

(56) Entgegenhaltungen:
- DE-A1- 102014 003 451
- DE-A1- 102015 015 775
- DE-A1- 102019 102 804
- DE-A1- 19 628 123
- US-A1- 2012 185 080

## Beschreibung

Die vorliegende Offenbarung betrifft eine Regalanlage, die in intralogistischen Lager- und/oder Kommissioniersystemen zum Einsatz kommt und die einen flexibel und bedarfsgerecht gestaltbaren Fluchtweg aufweist, der betreiberseitigen Vorgaben und/oder geltenden Sicherheitsstandards genügt.

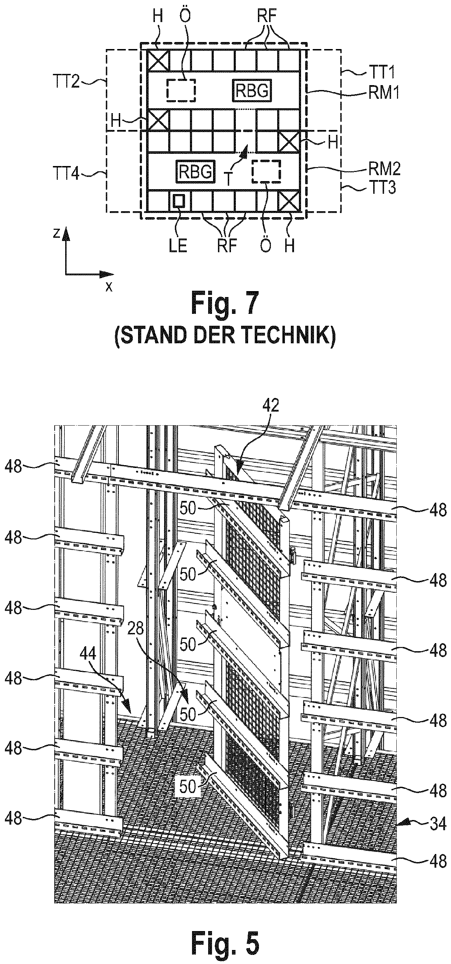

Herkömmliche Regalanlagen weisen Regalmodule (RM) auf, die in einer Höhenrichtung Y der Regalanlage direkt aneinander grenzend übereinander und/oder in einer Querrichtung Z der Regalanlage direkt aneinander grenzend nebeneinander angeordnet sind, vgl. Fig. 7. Ferner weisen die herkömmlichen Regalanlagen schienengeführte Regalbediengeräte (RBG) auf, um Lagereinheiten (LE) automatisch in Regalfächer (RF) einzulagern und aus den Regalfächern auszulagern. Die Regalmodule werden durch zwei parallel zueinander ausgerichtete Regale (R) gebildet, wobei jedem Regalmodul Abschnitte der Regale zugewiesen sind. Für jedes Regalmodul ist mindestens eines der Regalbediengeräte vorgesehen, dass in einem (freien) Raum zwischen den Regalen, d.h. in der Regalgasse (RG), automatisch betrieben wird. In der Regalgasse weist jedes Regalmodul einen begehbaren Wartungsgang auf, damit ein Wartungstechniker das entsprechende Regalbediengerät im Falle eines Defekts oder Ausfalls vor Ort inspizieren und ggf. reparieren kann. Wenn im Folgenden vom Wartungstechnikern die Rede ist, sind darunter auch immer Bedienpersonen zu verstehen, die einen Wartungsgang auch zum Zweck einer Störungsbeseitigung betreten.

Üblicherweise betritt der Wartungstechniker die Regalgasse bzw. den Wartungsgang zu diesem Zwecke von einer der beiden (offenen) Stirnseiten des Regalmoduls aus, wo in diesem Fall entsprechend gesicherte Türen vorgesehen sind. Die Wartungsgänge von höher gelegenen Regalmodulen sind über stirnseitig angeordnete Aufzüge, Leitern oder Treppentürme (TT) erreichbar.

Gesetzliche Vorschriften (z.B. Arbeitsschutzrecht), die sich von Land zu Land unterscheiden können, stellen an Flucht- und Rettungswege hohe Anforderungen, die somit auch für die Wartungsgänge in den Regalgassen gelten. Neben dem Brandschutz (siehe z.B. MlndBauRL) können ferner Kunden- bzw. Betreiberwünsche zu beachten sein. Auch Forderungen von Versicherung können eine Rolle spielen.

Eine mögliche Anforderung ist, dass die Möglichkeit zur Flucht in einer Entfernung von maximal 100 m gegeben sein muss, wenn es zwei oder mehr Fluchtmöglichkeiten gibt. Wenn es nur eine einzige Fluchtmöglichkeit gibt, darf die Entfernung maximal 50 m betragen, was eine weitere Anforderung darstellt (siehe Abs. [0004] der unten diskutierten DE 10 2015 015775 A1).

In konventionellen Regalanlagen der oben beschriebenen Art stellen die beiden stirnseitigen Zugänge zur Regalgasse zwei Fluchtmöglichkeiten dar, wenn dort keine Vertikalförderer (Heber) positioniert sind. Die Dokumente DE 10 2015 015 775 A1 (Gebhardt) und DE 10 2019 102 804 A1 bzw. EP 3 696 116 A1 (Klug) diskutieren verschiedene Fluchtmöglichkeiten im Problemfeld von sehr langen Regalgassen, die ggf. zusätzlich stirnseitig durch Vertikalförderer einseitig oder beidseitig versperrt sein können.

Die DE 10 2015 015 775 A1 (Gebhardt) geht von einer Regalanlage aus, die (stillschweigend) regalintegrierte Heber H - aber keine stirnseitigen regalexternen Heber am Eingang und am Ausgang der Regalgasse - zum vertikalen Transport der Lagereinheiten LE aufweist. An den stirnseitigen Enden der Regalgasse dieser Regalanlage sind beidseitig Treppentürme vorgesehen. Fig. 7 zeigt eine schematische Draufsicht auf zwei in der Querrichtung Z direkt nebeneinander angeordneten Regalmodule (RM1, RM2) einer Regalanlage gemäß der DE 10 2015 015 775 A1. Weitere (nicht dargestellte) Regalmodule grenzen in der Höhenrichtung Y direkt an die dargestellten Regalmodule an.

Wenn die Regalgasse länger als 50 m ist, sieht die DE 10 2015 015 775 A1 in einem - in Längsrichtung der Regalanlage betrachtet - mittleren Bereich zusätzliche Durchgänge (Öffnungen) vor, um aus einem Wartungsgang des einen Regalmoduls, das zu warten ist, in einen Wartungsgang eines direkt angrenzenden, anderen Regalmoduls flüchten zu können. Damit der Wartungstechniker z.B. in ein vertikal benachbartes Regalmodul flüchten kann, sind in den Böden der Wartungsgänge Öffnungen (Ö) mit schwenkbaren Leitern (nicht dargestellt) vorgesehen. Wenn die Flucht alternativ in einen Wartungsgang eines horizontal direkt benachbarten Regalmoduls, das in einer Querrichtung Z angrenzend und auf der gleichen Höhe an das zu wartende Regalmodul vorgesehen ist, erfolgen soll, wird ein horizontaler Tunnel durch die betroffenen Regale der beteiligten Regalmodule hindurch vorgesehen, der regalfachlos, d.h. ohne Regalfächer, ausgebildet ist und der sich in der Querrichtung Z der Regalanlage erstreckt. In beiden Fällen muss der Wartungsgang des direkt vertikal oder horizontal benachbarten Regalmoduls während der Wartung für eine potenzielle Flucht ebenfalls stillgelegt werden, so dass dort ein Automatikbetrieb der Regalbediengeräte nicht möglich ist, was die Leistung der Regalanlage zusätzlich zum bereits ausgefallenen Regalmodul verringert. Alternativ können beim Durchgang installierte Notabschaltungen ausgelöst werden.

Die DE 10 2015 015 775 A1 offenbart zudem eine weitere Ausführungsform, bei der die Fluchtöffnung nicht zwischen benachbart übereinander angeordneten Gassengängen, sondern zwischen in benachbart in Breitenrichtung parallel beabstandeten Gassengängen gebildet wird, so dass die Fluchtöffnung durch die jeweilige Regallagereinheit führt.

Die DE 10 2019 102 804 A1 (Klug) geht von einer analog aufgebauten Regalanlage aus, die zusätzlich zumindest einen stirnseitigen Heber am Eingang oder am Ausgang der Regalgasse zum vertikalen Transport der Lagereinheiten und/oder der Regalbediengeräte (Roaming) aufweist. Dieser regalexterne Heber erstreckt sich über die gesamte Höhe der Regalgasse und grenzt direkt an die Regalgasse an, so dass eine Flucht über dieses Ende der Regalgasse nicht möglich ist. Der Zugang zu den Wartungsgängen erfolgt über die heberfreie (Stirn-)Seite der Gasse. Damit die Flucht auch über die heberversperrte Seite erfolgen kann, schlägt die DE 10 2019 102 804 A1 vor, dort auf der Höhe des Wartungsgangs eine schwenkbar oder verschieblich gelagerte Brücke vorzusehen, die es dem Wartungstechniker im Fall einer Flucht ermöglicht, den Schacht des stirnseitigen Hebers horizontal in der Längsrichtung X der Regalanlage zu überqueren, ohne abzustürzen, und über einen dort vorgesehenen, äußeren Treppenturm oder eine außen am Regal angebrachte Fluchtleiter zu flüchten. In einer Normalstellung blockiert die Brücke den Heber nicht. Auf diese Weise wird ebenfalls ein zusätzlicher Fluchtweg vorgesehen, der das Problem löst, das vorliegt, wenn der Wartungsgang eine zulässige maximale Fluchtweglänge (z.B. maximal nur 50 m) nicht überschreitet. Wenn der Wartungsgang länger ist, kann auch die Brücke das Problem, dass zumindest eine Fluchtmöglichkeit innerhalb des zulässigen Maximalabstands (z.B. in 50 m Entfernung) erreichbar ist, allein nicht lösen, weil das defekte Regalbediengerät einen der beiden Fluchtwege blockiert. In diesem Fall werden zusätzliche Fluchtwege benötigt. Für dieses Problem liefert die DE 10 2019 102 804 A1 keine Lösung.

Das für die DE 10 2019 102 804 A1 beschriebene Problem verschärft sich zusätzlich, wenn auf beiden Seiten der Regalgasse regalhohe Heber vorgesehen sind, weil die Wartungsgänge in diesem Fall nicht stirnseitig zugänglich sind.

Das Dokument US 2012/185080 A1 betrifft, gemäß seiner Zusammenfassung, ein Wartungszugriffssystem für ein Regalbediengerät mit einem Regalbediengerät und darin angeordneten automatisierten Transportfahrzeugen. Das System umfasst mindestens eine Wartungszugriffssteuereinheit, die einem Teil des Raums zugeordnet ist, mindestens eine Barriere in dem Raum und eine Grenze des Teils des Raums definiert und dazu konfiguriert ist, im Wesentlichen die Durchfahrt der Fahrzeuge an der mindestens einen Barriere vorbei zu verhindern, und eine mit der Steuereinheit verbundene Steuerung, wobei die Steuerung konfiguriert ist, ein Signal von der mindestens einen Steuereinheit zu empfangen, um den Teil des Raums zu isolieren, der der mindestens einen Steuereinheit zugeordnet ist, wobei die Steuerung als Reaktion auf das Signal die mindestens eine Barriere schließt, die den Teil des Raums isoliert, und das Entfernen oder Stillsetzen von Fahrzeugen innerhalb des Teils des Raums bewirkt.

Das Dokument DE 10 2014 003451 A1 betrifft, gemäß seiner Zusammenfassung, ein Regalbediengerät für ein Lagerregal. Das Regalbediengerät umfasst eine oder mehrere horizontale Fahrschienen, die am Lagerregal in einem definierten Abstand zum Boden angebracht sind und sich in horizontaler Richtung entlang des Lagerregals erstrecken, ein Fahrwerk, das entlang der einen oder mehreren Fahrschienen in horizontaler Richtung verfahrbar ist, einen Teleskopmast, der am Fahrwerk angebracht ist und einen beweglichen Mastabschnitt aufweist, der relativ zum Fahrwerk in vertikaler Richtung verfahrbar ist, sowie eine Lastaufnahme zum Aufnehmen und Abgeben von ein- oder auszulagernden Gütern, die an dem Teleskopmast angebracht ist und relativ zum Teleskopmast in vertikaler Richtung verfahrbar ist. Dabei ist das Lagerregal durch das Regalbediengerät über die gesamte Regalhöhe hinweg bedienbar.

Es ist daher eine Aufgabe der vorliegenden Offenbarung, eine Regalanlage vorzusehen, die bedarfsgerechte Fluchtmöglichkeiten vorsieht. Insbesondere sind die lokal gültigen Regeln und Rechtsvorschriften sowie weitere Wünsche des Kunden (Anlagenbetreiber) zu beachten. Ferner ist es wünschenswert, einen Automatikbetrieb von direkt benachbarten Regalmodule während der Wartung nicht abschalten zu müssen. Die Lösung soll unabhängig davon sein, ob die Regalanlage an einem oder beiden stirnseitigen Enden der Regalgasse regalexterne Heber vorsieht oder nicht. Auch soll die Gesamtlänge der Regalgasse unbeachtlich sein, so dass auch sehr lange Regalgassen mit Längen weit über zulässige Maximalfluchtweglängen (z.B. 50 m) hinaus mit ausreichend Fluchtmöglichkeiten bereitgestellt werden können.

Diese Aufgabe wird durch eine Regalanlage nach Anspruch 1, und alternativ nach Anspruch 6, gelöst. Im Falle einer Flucht muss kein anderer Wartungsgang benutzt werden.

Die Regalanlage der vorliegenden Offenbarung kann darauf verzichten, benachbarte Regalmodule während einer Wartung stillzulegen, weil der Wartungstechniker im Falle einer Flucht keinen der anderen Wartungsgänge mitbenutzen muss, die unmittelbar an den Wartungsgang angrenzen, in welchem sich das defekte oder ausgefallene Regalbediengerät befindet. Der Wartungstechniker flüchtet ausschließlich durch das Regal, indem sich der Wartungstechniker entlang des regalintegrierten Fluchtkanals bewegt. Der Fluchtkanal erstreckt sich ausschließlich durch das Regal bis zu einem Ausgang hin, der mit der Außenwelt der Regalanlage verbunden ist. Ein Verlauf des Fluchtkanals ist in der vertikalen Richtung und horizontalen Richtung frei wählbar. Die Anzahl der Fluchtkanäle ist frei wählbar.

Wenn die Enden der Regalgasse durch (stationäre) Heber - als Fluchtwege - blockiert sind, werden innerhalb der Regale, die den betroffenen Wartungsgang seitlich und in der Höhenrichtung begrenzen, ein oder mehrere Fluchtkanäle (abhängig von der Gesamtlänge der Regalgasse) vorgesehen. Diese Fluchtkanäle können sowohl über die Länge der Regalgasse als auch über die beiden begrenzenden Regale beliebig verteilt werden, so dass immer mindestens eine Fluchtmöglichkeit, und zwar unabhängig vom Ort des ausgefallenen Regalbediengeräts, gegeben ist, die weniger als eine zulässige Maximalfluchtweglänge (z.B. 50 m) vom Ort des ausgefallenen Regalbediengeräts oder einer Störungsstelle entfernt ist.

Der Fluchtkanal ist - unter Auslassung von normalerweise vorgesehenen Regalfächern - direkt in einen Regalbau integriert. Außerhalb der Regalanlage wird ein zusätzlicher Treppenturm nicht benötigt, was die Anforderungen an die Statik des Regalbaus sowie die Investitionskosten und den Platzbedarf verringern kann.

Die Fluchtmöglichkeiten lassen sich also beliebig - unabhängig von einer Regalgassenlänge sowie von einer Anzahl und einem Positionierungsort von Hebern - skalieren.

Die Flucht erfolgt in einem Bereich der Regalanlage, wo keine Maschinen wie z.B. Regalbediengeräte und/oder Heber, bewegt werden, so dass Kollisions- und Verletzungsgefahren für den Wartungstechniker ausgeschlossen sind.

Durch eine geschickte Relativpositionierung und Verteilung der Fluchtkanäle fällt ein Wegfall der sonst dort vorgesehenen Regalfächer, hinsichtlich einer Lagerkapazität, kaum ins Gewicht. Heutzutage sind die Regalanlagen sehr lang (Gassenlänge > 100 m) und sehr hoch (> 12 m), so dass der Wegfall der entsprechenden Regalfächer für den oder die Fluchtkanäle in keinem Verhältnis zum Mehraufwand eines externen Treppenturms und/oder abgeschalteter benachbarter Regalmodule steht.

Gemäß der Erfindung nach Anspruch 1 umfasst der Fluchtkanal einen Fluchtschacht, der sich in der Höhenrichtung durch das zumindest eine der Regale erstreckt und der die Regalmodule in der Höhenrichtung regalfachlos miteinander verbindet.

In diesem Fall erfolgt die Flucht im Wesentlichen in der vertikalen Richtung über mehrere Regalmodule hinweg durch das Regal hindurch, z.B. über eine Steigleiter. Die Höhe der Regalanlage spielt keine Rolle. Die erforderliche Statik wird durch die Regalanlage selbst bereitgestellt.

Vorzugsweise ist der Fluchtkanal ausschließlich durch den Fluchtschacht definiert, der an einem Längsende des zumindest einen der Regale angeordnet ist und der auf einem Fluchtniveau in der Längsrichtung oder Querrichtung direkt mit der Außenwelt verbunden ist.

Wenn der Fluchtkanal an einem stirnseitigen Ende der Regale angeordnet ist, muss der flüchtende Wartungstechniker keinen Weg in der Längsrichtung durch die Regale zurücklegen, um die Außenwelt zu erreichen. Es gehen wenige Regalfächer verloren.

Der flüchtende Wartungstechniker klettert lediglich vertikal durch die Regale bis auf die Höhe eines Fluchtniveaus, das üblicherweise am Boden der Regallage angeordnet ist.

Alternativ kann der Fluchtschacht, entfernt zu einem Längsende des zumindest einen der Regale, angeordnet sein.

Die Positionierung des Fluchtkanals oder mehrerer Fluchtkanäle zwischen den Längsenden des Regals wird für Regalgassen benötigt, die länger als eine zulässige Maximalfluchtweglänge (z.B. 50 m) sind. In diesem Fall können der oder die Fluchtschächte so positioniert werden, dass sie immer weniger als eine zulässige Maximalfluchtweglänge, insbesondere 50 m, von einem havarierten Regalbediengerät entfernt sind.

Vorzugsweise sind der oder die Fluchtkanäle in diesem Fall ausschließlich durch Fluchtschächte definiert, die auf einem Fluchtniveau in der Querrichtung direkt mit der Außenwelt verbunden sind. Anderenfalls umfassen der oder die Fluchtkanäle ferner zumindest einen Fluchtgang, der sich auf dem Fluchtniveau bis zur Außenwelt erstreckt und der den oder die Fluchtkanäle in der Längsrichtung mit der Außenwelt verbindet.

Im ersten Fall ist der Fluchtkanal an eine äußere Längsseite der Regalanlage angeschlossen, wenn dort keine weiteren Regale den Weg zur Außenwelt blockieren. Dies bedeutet mit anderen Worten, dass diese Lösung insbesondere für isoliert vorgesehene Regalanlagen, wo die Regalmodule ausschließlich vertikal übereinander angeordnet sind, von Vorteil ist, um möglichst wenige Regalfächer an den Fluchtkanal zu verlieren.

Im zweiten Fall, wo sich auf dem Fluchtniveau ein Fluchtgang an den Fluchtkanal anschließt, werden die dort zusätzlich verloren Regalfächer absichtlich in Kauf genommen, um weitere Regalanlagen bzw. Regalmodule in der Querrichtung direkt benachbart zur betroffenen Regalanlage positionieren zu können. Im zweiten Fall erfolgt die (finale) Flucht ausschließlich in der Längsrichtung, weil die Querrichtung durch direkt angrenzende Regalanlagen blockiert ist.

Alternativ und gemäß der Erfindung nach Anspruch 6 umfasst der Fluchtkanal in dem zumindest einen der Regale ausschließlich Fluchtgänge, die sich in der Längsrichtung erstrecken und die den jeweiligen Wartungsgang mit der Außenwelt verbinden.

Der flüchtende Wartungstechniker muss in diesem Fall nicht vertikal durch das Regal klettern. Dadurch verringert sich eine Absturzgefahr innerhalb des Regals. Die Sicherheitsanforderungen lassen sich einfacher außerhalb des Regals erfüllen, durch einen äußeren Treppenturm oder eine Feuerleiter.

Die Regalanlage umfasst in diesem Fall ferner den Treppenturm oder die Feuerleiter, der bzw. die in der Längsrichtung entweder direkt, oder indirekt über einen Verbindungssteg, an das zumindest eine der Regale gekoppelt ist, so dass jeder der Fluchtgänge (in der Höhenrichtung) mit einem vorab bestimmten Fluchtniveau (in der Außenwelt) verbunden ist.

Bei einer weiteren bevorzugten Ausführungsform umfasst das mindestens eine Regalbediengerät eine Vielzahl von Shuttle (Einebenen- oder Mehrebenen-Regalbediengeräte), die entlang von Schienen in der Längsrichtung geführt beweglich sind, wobei die Schienen im Wartungsgang in der Höhenrichtung übereinander und in der Querrichtung auf beiden Seiten an den Regalfächern angebracht sind und sich in der Längsrichtung erstrecken, und wobei der Fluchtkanal über eine Tür, die Teilabschnitte der Schienen umfasst, mit dem jeweiligen Wartungsgang verbunden ist.

Die Schienen verhindern herkömmlicherweise eine Flucht in der Querrichtung aus dem Wartungsgang, selbst wenn dort im Regal keine Regalfächer vorgesehen sind. Die Tür ist mit Teilabschnitten der Schienen versehen, so dass die Tür in einem geschlossenen Zustand von den Shuttle passiert werden kann. Im geöffneten Zustand gibt die Tür dem Wartungstechniker den Weg zum Fluchtkanal frei.

Die Tür kann sicherheitstechnisch überwacht werden, um eine Notabschaltung der Regalbediengeräte zu veranlassen, wenn die Tür (unabsichtlich und unangekündigt) geöffnet wird. Die Tür kann arretiert werden, um im Automatikbetrieb eines Regalbediengeräts nicht unabsichtlich aufzuspringen.

Vorzugsweise besteht die Tür ausschließlich aus den Teilabschnitten, die manuell entfernbar (z.B. formschlüssig) in die Endstücke der jeweiligen restlichen Schienen einlegbar sind.

Das Öffnen und Schließen der "Tür" ist in diesem Fall zwar mit mehr Aufwand für den Wartungstechniker verbunden. Jedoch müssen die Schienenstücke in diesem Fall nicht beweglich gelagert werden, so dass die Tür technisch einfacher gestaltet ist und weniger kostet.

Alternativ ist die Tür (im Wesentlichen) in der Längsrichtung verschieblich gelagert.

In diesem Fall kann die Tür z.B. durch einen leichten Druck in das Regal hineinbewegt werden, um anschließend seitlich in der Längsrichtung zur Seite geschoben zu werden, um den Zugang zum Fluchtkanal freizugeben. Auch hier ermöglicht die Tür im geschlossenen Zustand eine Passage der Shuttle und im geöffneten Zustand einen Durchgang des Wartungstechnikers.

Als weitere Alternative kann die Tür um eine Schwenkachse drehbar gelagert sein, die sich entlang der Höhenrichtung (oder Längsrichtung) erstreckt.

Insbesondere ist die Tür in einem geschlossenen Zustand arretierbar, in welchem die Shuttle an der Tür ungehindert vorbeifahren können.

Die Arretierung verhindert, dass sich die Tür selbstständig (unbeabsichtigt) öffnen kann, was zu Beschädigungen durch die und/oder an den vorbeifahrenden Shuttle führen würde.

Ferner kann ein Sensor vorgesehen sein, der eine Stellung der Tür überwacht und der ein Signal an eine Sicherheitssteuerung ausgibt, wenn sich die Tür in einer geöffneten Stellung befindet, wobei die Sicherheitssteuerung eingerichtet ist, die Shuttle im Wartungsgang zu deaktivieren, sobald das Signal empfangen wird.

Auf diese Weise ist sichergestellt, dass die Shuttle nicht automatisch betreibbar sind, während sich der Wartungstechniker im Wartungsgang aufhält.

Vorzugsweise ist die Regalgasse länger als eine zulässige Maximalfluchtweglänge , insbesondere 50 m.

Durch den Fluchtkanal kann ein zusätzlicher Fluchtweg innerhalb des Regals geschaffen werden, ohne dass benachbarte Regalmodule während der Wartung stillgelegt werden müssen.

Insbesondere ist an einem Ende, oder jeweils an beiden Enden der Regalgasse, direkt ein regalexterner Heber angeordnet, so dass Lagereinheiten und/oder das zumindest eine Regalbediengerät in der Höhenrichtung zwischen den Regalmodulen transportiert werden können.

Obwohl die normalerweise offenen Zugänge der Regalgassen durch den oder die regalexternen Heber blockiert sind, kann über den regalintegrierten Fluchtkanal ein (weiterer) Fluchtweg bereitgestellt werden, wobei insbesondere benachbarte Regalmodule während der Wartung nicht stillgelegt werden müssen. Dennoch können der oder die Heber am Gassenende Lagereinheiten und/oder Regalbediengeräte in der Höhenrichtung transportieren. Ein kreisendes Roaming von Regalbediengeräten, wie in der EP 2 683 629 B1 beschrieben, ist somit möglich.

Ferner sind die regalexternen Heber weiterhin von außen frei zugänglich, was eine Wartung der regalexternen Heber deutlich vereinfacht.

Alternativ oder ergänzend ist in einem oder in beiden der Regale zumindest ein regalintegrierter Heber vorgesehen.

Wenn neben dem regalintegrierten Heber keine regalexternen Heber vorhanden sind, kann der (zusätzliche) Fluchtkanal - neben den konventionellen Fluchtwegen am Eingang und Ausgang der Regalgasse - die gestellten Anforderungen bei sehr langen Gassenlängen erfüllen.

Vorzugsweise umfasst die Regalanlage ferner das mindestens eine Regalbediengerät.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, sofern hierbei nicht der Schutzbereich der nachstehenden Ansprüche verlassen wird.

Ausführungsbeispiele der Erfindung sind in den Zeichnungen dargestellt und werden in der nachfolgenden Beschreibung näher erläutert. Es zeigen:
Fig. 1 eine Seitenansicht (Fig. 1A) und eine Draufsicht (Fig. 1B) einer ersten Ausführungsform einer Regalanlage;
Fig. 2 eine Seitenansicht (Fig. 2A) und eine Draufsicht (Fig. 2B) einer zweiten Ausführungsform einer Regalanlage;
Fig. 3 eine Seitenansicht (Fig. 3A) und eine Draufsicht (Fig. 3B) einer dritten Ausführungsform einer Regalanlage;
Fig. 4 ein Blockdiagramm einer Regalanlage;
Fig. 5 eine perspektivische Ansicht in einen Teil eines Wartungsgangs, der eine Tür aufweist;
Fig. 6 eine perspektivische Ansicht eines weiteren Beispiels für eine Tür; und
Fig. 7 eine schematische Draufsicht auf eine herkömmliche Regalanlage.

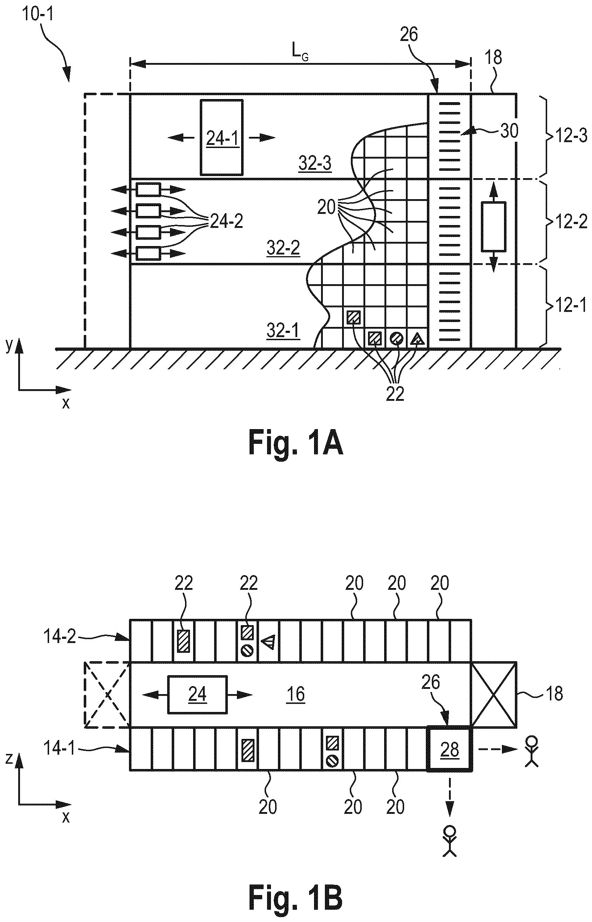

Die Fig. 1 bis 3 zeigen drei verschiedene, exemplarische Ausführungsformen einer Regalanlage 10.

Die hier vorgeschlagene Regalanlage 10 kommt allgemein in einem intralogistischen Lager- und/oder Kommissioniersystem, wie z.B. in einem Distributionszentrum, zum Einsatz.

Die Intralogistik umfasst logistische Material- und Warenflüsse innerhalb eines Betriebsgeländes, insbesondere innerhalb eines Betriebsgebäudes. Der Begriff Intralogistik wurde definiert, um eine Abgrenzung zum Warentransport außerhalb des Betriebs zu schaffen, der z.B. durch eine Spedition erfolgt. Das "Forum Intralogistik" im "Verband Deutscher Maschinen- und Anlagenbauer" definiert die Intralogistik als die Organisation, Steuerung, Durchführung und Optimierung des innerbetrieblichen Waren- und Materialflusses, der Informationsströme sowie des Warenumschlags in Industrie, Handel oder öffentlichen Einrichtungen.

Unter dem Begriff Kommissionierung versteht man das Zusammenstellen einer kundenspezifischen Bedarfsmenge aus einem Sortiment aus mehreren Artikeltypen. Die Kommissionierung beschreibt also eine Kommissionszusammenstellung für einen Kundenauftrag, d.h. eine Entnahme von Teilmengen größerer Einheiten einzelner Artikel und deren Zusammenführung und Bereitstellung für einen Versand an den Kunden.

Die Regalanlage 10 kann sowohl in einem Lagersystem als auch in einem Kommissioniersystem eingesetzt werden.

Fig. 1A zeigt eine Seitenansicht einer ersten Ausführungsform 10-1 einer Regalanlage 10. Fig. 1B zeigt eine Draufsicht auf die Regalanlage 10-1 der Fig. 1A.

Die Regalanlage 10-1 der Fig. 1 weist exemplarisch drei in der Höhenrichtung Y vertikal übereinander angeordnete Regalmodule 12-1 bis 12-3 auf. Es versteht sich, dass allgemein mehr oder weniger Regalmodule 12 vorgesehen werden können. Es werden jedoch mindestens zwei Regalmodule 12 vorgesehen, die in der Höhenrichtung Y der Regalanlagen 10 direkt aneinandergrenzen.

Jedes der Regalmodule 12-1 bis 12-3 wird aus (Teilen bzw. Abschnitten von) zwei Regalen 14-1 und 14-2 (vgl. Fig. 1B) gebildet. Die Regale 14-1 und 14-2 sind in der Längsrichtung X der Regalanlage 10 parallel zueinander ausgerichtet und angeordnet sowie in einer Querrichtung Z der Regalanlage 10 beabstandet zueinander angeordnet, um so eine Regalgasse 16 zwischen sich zu definieren. Die Regalgasse 16 stellt also den (freien) Raum zwischen den beiden Regalen 14-1 und 14-2 dar. Die Regalgasse 16 erstreckt sich in der Längsrichtung X von einem ersten Längsende zum gegenüberliegenden zweiten Längsende, wo exemplarisch ein (regalexterner) Heber 18 positioniert ist. Es versteht sich, dass auch am ersten Längsende der Regalgasse 16 ein weiterer Heber 18 positioniert sein könnte, der in der Fig. 1B durch eine Strichlinie angedeutet ist.

Allgemein ist unter einem Heber 18 ein stationärer Vertikalförderer zu verstehen.

Jedes der Regale 14-1 und 14-2 weist eine Vielzahl von Regalfächern 20 auf, die im Beispiel der Fig. 1 in der Längsrichtung X und in der Höhenrichtung Y direkt aneinandergrenzen. Die Regalfächer 20 sind generell eingerichtet ein oder mehrere Lagereinheiten 22 (in der Z-Richtung hintereinander) aufzunehmen. Die Regalfächer 20 können unterschiedlich dimensioniert sein. Vorzugsweise sind die Regalfächer 20 aber mit gleichen Abmessungen definiert. Die Regalfächer 20 sind eingerichtet, die Lagereinheiten 22 sitzend (Böden oder Winkel) oder hängend (seitliche Winkel) aufzunehmen. Die Lagereinheiten 22 werden allgemein automatisch mit Regalbediengeräten 24 ein- und ausgelagert.

In der Fig. 1A sind exemplarisch zu Veranschaulichungszwecken zwei unterschiedliche Typen von Regalbediengeräten 24 gezeigt. Üblicherweise wird nur ein Typ eingesetzt. Dem Regalmodul 12-3 ist ein (einziges) Mehrebenen-Regalbediengerät 24-1 zugeordnet, das vier übereinander angeordnete Regalebenen bedienen kann. Dem Regalmodul 12-2 sind exemplarisch vier Einebenen-Regalbediengeräte 24-2 zugeordnet, die jeweils nur eine der vier Regalebenen (nicht näher bezeichnet) bedienen können. Andere Typen von Regalbediengeräten 24 können eingesetzt werden. Es versteht sich, dass auch mehr oder weniger Regalebenen pro Regalmodul vorgesehen werden können

Des Weiteren umfasst die Regalanlage 10-1 der Fig. 1 einen, exemplarisch einzigen, Fluchtkanal 26. Der Fluchtkanal 26 ist regalintegriert ausgebildet. Dies bedeutet, dass sich der Fluchtkanal 26 ausschließlich innerhalb des Regals 14 erstreckt. Im Bereich des Fluchtkanals 26 ist das Regal 14 regalfachlos ausgebildet. Dies bedeutet, dass im Bereich des Fluchtkanals 26 keine Regalfächer 20 vorgesehen sind.

Der Fluchtkanal 26 ist in der Fig. 1 ausschließlich durch einen (vertikalen) Fluchtschacht 28 definiert, der vorzugsweise am Längsende des ersten Regals 14-1 in unmittelbarer Nähe zum regalexternen Heber 18 positioniert ist. Der Fluchtschacht 28 der Fig. 1 erstreckt sich in der Höhenrichtung Y über alle drei Regalmodule 12-1 bis 12-3. Der Fluchtschacht 28 ist innen mit einer Leiter 30 versehen, damit ein (nicht dargestellter) Wartungstechniker, der sich in den oberen Regalmodulen 12-2 und 12-3 aufhält, auf ein Bodenniveau (Fluchtniveau) absteigen kann, um den Fluchtkanal 26 entweder in der Längsrichtung X und/oder in der Querrichtung Z in eine Außenwelt der Regalanlage 10 zu verlassen, wie es in Fig. 1B durch strichpunktierte Pfeile angedeutet ist. Der Fluchtkanal 26 stellt neben dem offenen ersten Längsende der Regalgasse 16 eine zweite Fluchtmöglichkeit (Fluchtweg) dar.

Es versteht sich, dass das oder die Regalbediengeräte 24 jedes Regalmoduls 12 an einer beliebigen Stelle innerhalb der Regalgasse 16 ausfallen können. Deshalb ist innerhalb der Regalgasse 16 im Beispiel der Fig. 1 für jedes der Regalmodule 12-1 bis 12-3 ein Wartungsgang 32 vorgesehen. Vorzugsweise ist jedes der Regalmodule 12-1 bis 12-3 in seinem Bodenbereich mit begehbaren (z.B. gitterförmigen) Platten ausgestattet, so dass der Wartungstechniker im Wartungsgang 32 von jedem Regalmodul 12 zum defekten oder ausgefallenen Regalbediengerät 24 laufen kann und das Regalbediengerät 24 dort auch reparieren kann. In Abhängigkeit von dem Ort, wo sich das havarierte Regalbediengerät 24 innerhalb des zugehörigen Wartungsgangs 32 befindet, kann der Wartungstechniker in der Fig. 1 den entsprechenden Wartungsgang 32 entweder von der offenen Seite der Regalgasse 16 oder über den Fluchtkanal 26 betreten.

Aufgrund der eingangs diskutierten Anforderungen eignet sich die erste Ausführungsform der Regalanlage 10-1 besondere für kurze Regalgassen 16 mit einer Gesamtlänge L_{G}, die kürzer oder gleich lang als die zulässige Maximalfluchtweglänge, z.B. ≤ 50 m, weil in unmittelbarer Nähe zum blockierten Gassenende eine weitere Fluchtmöglichkeit geschaffen wird.

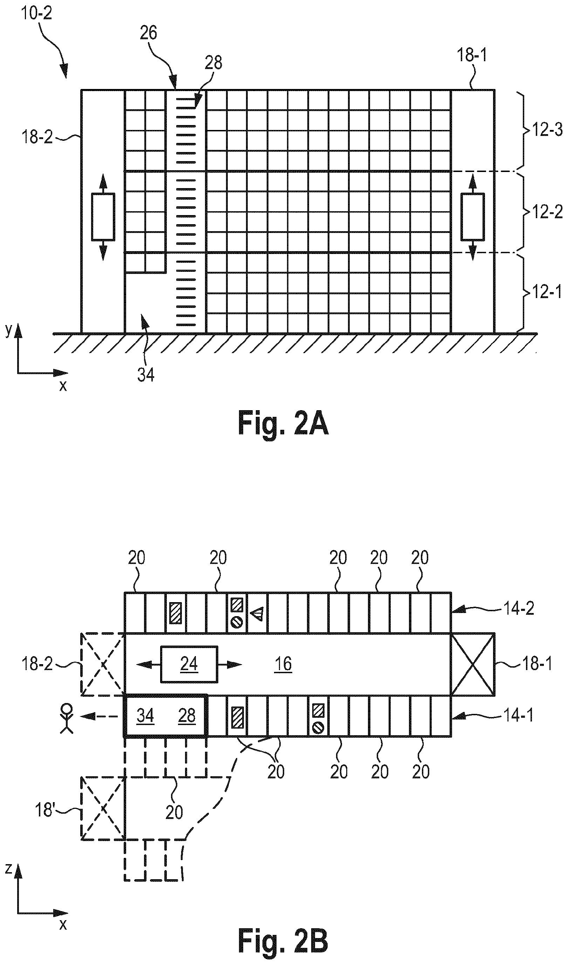

Es versteht sich, dass der Fluchtkanal 26 bzw. der Fluchtschacht 28 auch an einem anderen Ort in der Längsrichtung X innerhalb des entsprechenden Regals 14 positioniert werden kann. In diesem Fall ist der Fluchtkanal 26 auf dem Fluchtniveau aber nur in der Querrichtung Z betretbar, wenn kein (horizontaler) Fluchtgang 34 (vgl. Fig. 2) zusätzlich bereitgestellt wird.

Außerdem versteht es sich, dass auch am ersten Längsende ein weiterer Heber 18 vorgesehen sein könnte, so dass die Regalgasse 16 bzw. die Wartungsgänge 32-1 bis 32-3 der Fig. 1 ausschließlich über den Fluchtkanal 26 betreten werden können.

Auch versteht es sich, dass in jedem der Regale 14-1 und 14-2 ein oder mehrere Fluchtkanäle 26 gleichzeitig vorgesehen werden können.

Fig. 2 zeigt eine exemplarische zweite Ausführungsform einer Regalanlage 10-2, wobei die Fig. 2A eine Seitenansicht zeigt und die Fig. 2B eine Draufsicht auf die Regalanlage 10-2 der Fig. 2A zeigt.

Die Regalanlage 10-2 der Fig. 2 ist nahezu identisch zur Regalanlage 10-1 der Fig. 1 aufgebaut. Nachfolgend werden daher im Wesentlichen die Unterschiede näher betrachtet.

Die Regalanlage 10-2 der Fig. 2 weist wiederum exemplarisch drei Regalmodule 12-1 bis 12-3 auf, die vertikal direkt aneinandergrenzen. Die Regalmodule 12-1 bis 12-3 werden wiederum durch die zwei Regale 14-1 und 14-2 gebildet, die wiederum die Regalgasse 16 zwischen sich definieren.

Zusätzlich zum regalexternen Heber 18-1 am zweiten Längsende der Gasse 16 ist ein weiterer Heber 18-2 am ersten Längsende der Gasse 16 positioniert. Die Heber 18 erstrecken sich über die gesamte Höhe der Regalanlage 10-2. Die Regalgasse 16 bzw. die Wartungsgänge 32-1 bis 32-3 sind also nicht über die Gasse 16 betretbar. Die Wartungsgänge 32-1 bis 32-3 sind ausschließlich über den oder die Fluchtkanäle 26 betretbar.

Der Fluchtkanal 26 ist exemplarisch wieder im ersten Regal 14-1 angeordnet. Der Fluchtkanal 26 der Fig. 2 setzt sich aber abweichend vom Fluchtkanal 26 der Fig. 1 aus einem Fluchtschacht 28 und einem Fluchtgang 34 zusammen.

Der Fluchtschacht 28 der Fig. 2 erstreckt sich in der vertikalen Richtung Y durch alle Regalmodule 12-1 bis 12-3 bis zum Boden der Regalanlage 10-2, wo das Fluchtniveau angeordnet ist. Der Fluchtgang 34 erstreckt sich in der Längsrichtung X vom Fluchtschacht 28 durch das Regal 14-1 bis zur Außenseite (Außenwelt) des Regals 14-1. Der (horizontale) Fluchtgang 34 erstreckt sich in der Höhenrichtung Y exemplarisch über ein oder mehrere Regalfächer 20.

Eine Höhe und Breite des Fluchtgangs 34 werden generell so gewählt, dass der Wartungstechniker den Fluchtgang 34 auch in Eile kollisionsfrei durchqueren kann. Wenn die Regalfächer 20 zu einer mehrfachtiefen Lagerung der Lagereinheiten 22 eingerichtet sind, kann auch nur ein hinterer Teil der betroffenen Regalfächer 20 weggelassen werden, um Platz für den Fluchtgang 34 zu schaffen, so dass die betroffenen Lagerfächer 20 weiterhin über die Regalgasse 16 von dem Regalbediengerät 24 bedienbar sind.

Ähnliches gilt für den Fluchtschacht 28. Der Fluchtschacht 28 ist für eine Flucht dimensioniert und ersetzt eine Vielzahl von Lagerfächern 20 in der Höhenrichtung Y. Auch hier ist es im Falle einer mehrfachtiefen Lagerung in den Regalfächern 20 möglich, dass einige der betroffenen Regalfächer 20 nur teilweise in einem hinteren Bereich weggelassen werden. Es versteht sich, dass der Zugang zum Fluchtschacht 28 im Bodenbereich des jeweiligen Wartungsgangs 32 gewährleistet sein muss, so dass dort die betroffenen Regalfächer 20 vollständig weggelassen werden. Ferner versteht es sich, dass sich der Fluchtschacht 28 im höchsten Regalmodul 12, hier dem Regalmodul 12-3, nicht bis nach ganz oben reichen muss (nicht gezeigt in Fig. 2A), so dass auch dort weiterhin Regalfächer 20 zur normalen Benutzung durch das Regalbediengerät 24 verbleiben können.

Die Regalanlage 10-2 der Fig. 2 verdeutlicht ferner, dass der Fluchtkanal 26 generell entlang der Längsrichtung X an einer beliebigen Position innerhalb des betroffenen Regals 14 positioniert werden kann.

Die Ausführungsform der Fig. 2 ist insbesondere für Lager- und/oder Kommissioniersysteme geeignet, wo mehrere der Regalanordnungen 10-2 in der Querrichtung Z nebeneinander und direkt aneinandergrenzend angeordnet sind. In diesem Fall ist eine Flucht in der Querrichtung Z aus der Regalanlage 10-2 nicht möglich, so dass der Wartungstechniker ausschließlich in der Längsrichtung X aus der betroffenen Regalanlage 10-2 flüchten kann.

Ferner versteht es sich, dass die in der Seitenansicht der Fig. 2A angedeutete L-Form des Fluchtkanals 26 z.B. auch treppenförmig (nicht dargestellt) ausgebildet sein könnte. In diesem Fall wäre der Fluchtkanal 26 z.B. in drei vertikale Abschnitte unterteilt, die in der Längsrichtung X relativ zueinander für jedes Regalmodul 12 verschoben und über einen entsprechenden Fluchtgang 34 (nicht dargestellt) innerhalb des betroffenen Regals 14 miteinander verbunden sein können.

Dies bedeutet mit anderen Worten, dass ein Verlauf des Fluchtkanals 26 durch das betroffene Regal 14 beliebig und nach Bedarf aus Schachtkomponenten und Gangkomponenten konfigurierbar ist, was die Planung der Regalanlage 10 erleichtert, weil die Fluchtwege keinen Einfluss mehr haben.

Ferner ist es generell möglich, mehrere Fluchtkanäle 26, die im gleichen Regal 14 vorgesehen sind und die sich im Wesentlichen in der Höhenrichtung Y durch das entsprechende Regal 14 erstrecken, über einen oder mehrere (horizontale) Fluchtgänge 34 miteinander zu verbinden. Es versteht sich, dass je mehr Fluchtschächte 28 und Fluchtgänge 34 vorgesehen werden, mehr Regalfächer 20 verloren gehen. Diese (vermeintliche) Verringerung der Lagerkapazität wird aber durch die geforderte Ausgestaltung der Regalanlage hinsichtlich ausreichender Fluchtmöglichkeiten kompensiert.

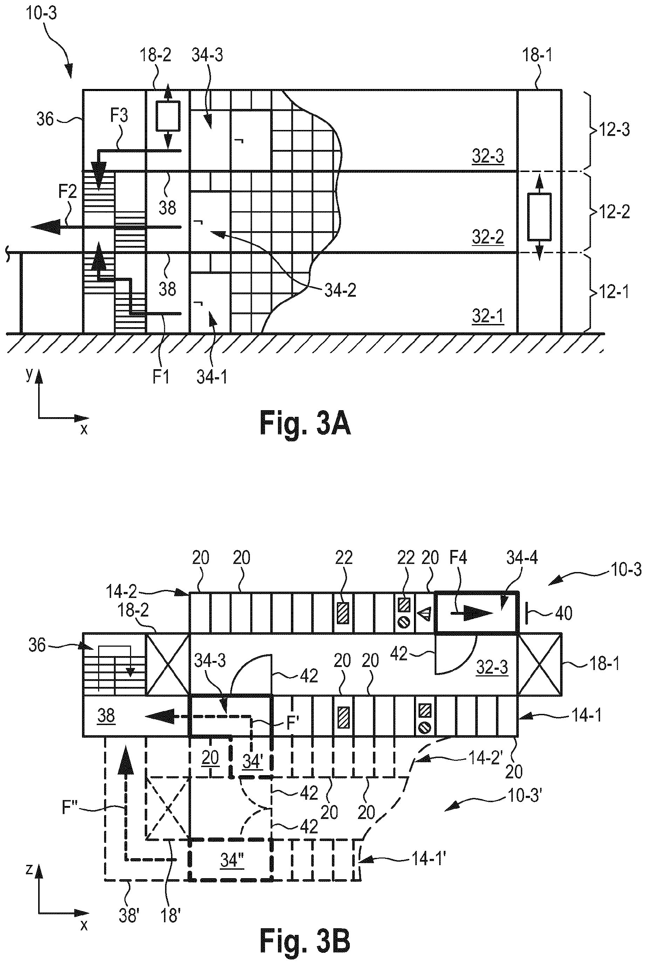

Fig. 3 zeigt eine dritte exemplarische Ausführungsform einer Regalanlage 10-3. Die Regalanlage 10-3 der Fig. 3 unterscheidet sich von den Regalanlagen 10-1 und 10-2 der Fig. 1 und 2 im Wesentlichen dadurch, dass der Fluchtkanal 26 ausschließlich durch (horizontale) Fluchtgänge 34 gebildet wird.

Jeder der Wartungsgänge 32-1 bis 32-3 ist jeweils mit einem Fluchtgang 34 verbunden. Die Fluchtgänge 34-1 und 34-2 der Regalmodule 12-1 und 12-2 sind direkt am Längsende des ersten Regals 14-1 angeordnet und deshalb kürzer als der Fluchtgang 34-3 des dritten Regalmoduls 12-3, der etwas entfernt zum Längsende des Regals 14-1 angeordnet ist.

Alle drei Fluchtgänge 34-1 bis 34-3 der Fig. 3 führen in der Längsrichtung X aus der Regalanlage 10-3 bzw. aus dem Regal 14-1 heraus. Fluchtschächte 28 gibt es nicht. Um dennoch die Flucht in der vertikalen Richtung Y zur Fluchtebene zu ermöglichen, die exemplarisch auf der mittleren Höhe des zweiten Wartungsgangs 32-2 angeordnet ist, ist außerhalb der Regalanlage 10-3 ein Treppenturm 36 vorgesehen. Der Treppenturm 36 schließt von außen an die Regalanlage 10-3 an. Der Treppenturm 36 schließt in der Längsrichtung X an den Heber 18-2 an. Das erste Regal 14-1 ist über einen Verbindungssteg 38 an den Treppenturm 36 gekoppelt. Der (horizontale) Verbindungssteg 38 kann in Bezug auf einen Verlauf beliebig konfiguriert werden, um die Fluchtgänge 34 mit dem Treppenturm 36 zu verbinden.

Es versteht sich, dass der Treppenturm 36 generell auch durch eine Fluchtleiter 40, einen Personenaufzug oder Ähnliches ersetzt werden kann, die direkt an das Längsende der Regale 14 oder am Heber 18 angebracht ist, so dass auf den Treppenturm 36 und die Verbindungsstege 38 verzichtet werden kann.

Die dritte Ausführungsform, die ohne Fluchtschächte 28 auskommt, ist besonders für Regalanordnungen geeignet, wo mehrere Regalanlagen 10 in der Querrichtung Z nebeneinander und direkt aneinandergrenzend angeordnet sind, wie es in der Fig. 3B durch Strichlinien angedeutet ist. In der Fig. 3B ist neben der Regalanlage 10-3 eine weitere (optionale) Regalanlage 10-3' gezeigt. Die Regalanlage 10-3' weist weitere Fluchtgänge 34' und 34" auf. Der Fluchtgang 34' erstreckt sich im oberen Regalmodule 12-3' in der Querrichtung Z durch das zweite Regal 14" und schließt innen an das Regal 14-1 der Regalanlage 10-3 an, um so einen weiteren Fluchtweg F' zu definieren, der in der Fig. 3B durch eine Strichlinie verdeutlicht ist. In diesem Fall flüchtet der Wartungstechniker zwar in ein anderes Regalmodul, dessen Automatikbetrieb aber nicht abgeschaltet werden muss, weil sich der Wartungstechniker nicht in der Regalgasse 16 bewegt, wenn er flieht.

Im Regal 14-1 der Regalanlage 10-3' ist noch ein weiterer (optionaler) Fluchtgang 34-2' gezeigt, der sich im Wesentlichen in der Längsrichtung X durch das Regal 14-1' zur Außenwelt erstreckt, um einen weiteren Fluchtweg F" zu definieren, der einen weiteren Verbindungssteg 38' umfasst. Der weitere Verbindungssteg 38' erstreckt sich um den Heber 18' der Regalanlage 10-3' herum und schließt an den Verbindungssteg 38 der Regalanlage 10-3 an, um indirekt an den Treppenturm 36 gekoppelt zu werden.

Bei den weiteren Fluchtgängen 34' und 34" ist zu beachten, dass die zugehörigen Fluchtwege F' und F" wiederum direkt zur Außenwelt führen, d.h. keinen anderen Wartungsgang 32 zur Flucht benutzen.

Ferner versteht es sich, dass auch bei der dritten Ausführungsform weitere optionale Fluchtkanäle 26 in den anderen Regalen 14 vorgesehen werden können. In der Fig. 3B ist ein weiterer Fluchtgang 34-4 gezeigt, der in dem zweiten Regal 14-2 der Regalanlage 10-3 angeordnet ist und der einen weiteren Fluchtweg F4 zum Längsende des Regal 14-2 definiert, wo der Heber 18-1 angeordnet ist. Der Fluchtweg F4 schließt an eine (Feuer-) Leiter 40 an, die an der Außenseite des Regals 14-2 angebracht ist und die bis zum Boden reichen kann.

Des Weiteren sind in der Fig. 3B optionale Türen 42 bzw. 42' gezeigt, die die Fluchtkanäle 26 bzw. Fluchtgänge 34 mit den zugehörigen Wartungsgängen 32 verbinden. Die Türen 42 werden nachfolgend noch näher beschrieben werden. Die Türen 42 der Fig. 3B öffnen sich exemplarisch in den zugehörigen Wartungsgang 32 hinein. In der geöffneten Stellung blockieren die Türen 42 eine Bewegung der (nicht dargestellten) Regalbediengeräte 24. Die Türen 42 sind eingerichtet, dass die Türen 42 in einem geschlossenen Zustand die Regalbediengeräte 24 passieren lassen. Dies gilt unabhängig davon, ob es sich hierbei um ein Einebenen- oder ein Mehrebenen-Regalbediengerät 24 handelt.

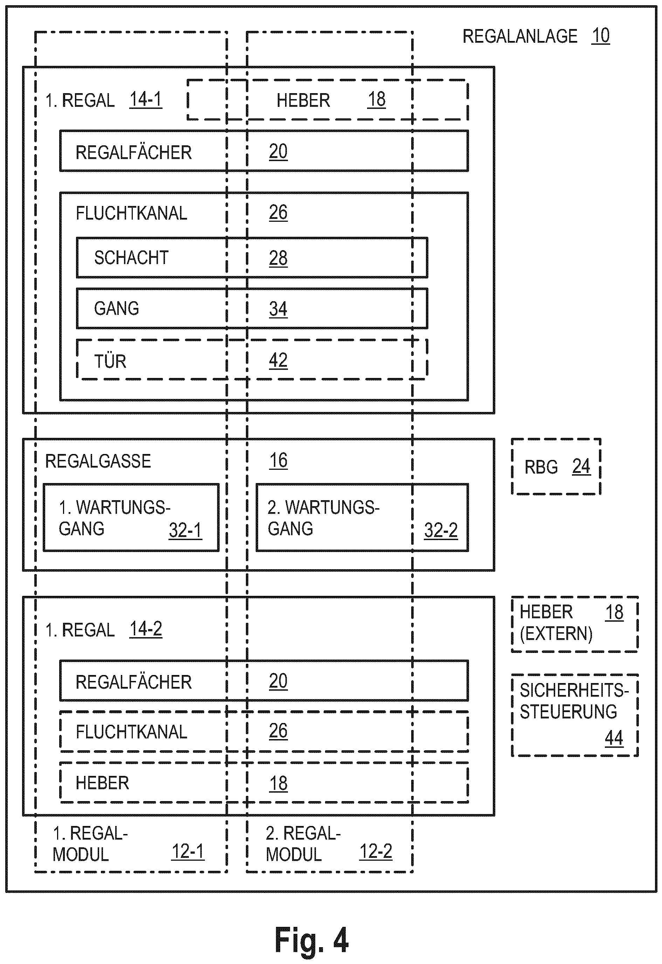

Fig. 4 stellt ein schematisches Blockdiagramm der Regalanlage 10 dar, um die allgemeine Struktur der Regalanlage 10 zu verdeutlichen. Die Fig. 4 veranschaulicht insbesondere eine "kleinste Einheit" der Regalanlage 10.

Die Regalanlage 10 weist mindestens zwei Regalmodule 12-1 und 12-2 auf, die in der Höhenrichtung Y und/oder der Querrichtung Z der Regalanlage 10 direkt aneinandergrenzen. Die Regalmodule 12-1 und 12-2 werden aus dem ersten Regal 14-1 und dem zweiten Regal 14-2 gebildet. Die Regale 14-1 und 14-2 sind in der Längsrichtung X der Regalanlage 10 parallel zueinander angeordnet und in der Querrichtung Z der Regalanlage beabstandet zueinander angeordnet, um so die Regalgasse 16 zwischen sich zu definieren. Die Regale 14-1 und 14-2 weisen jeweils eine Vielzahl der Regalfächer 20 auf.

Die Regalfächer 20 grenzen - mit Ausnahme der Fluchtkanäle 26 - zumindest in der Längsrichtung X (und üblicherweise auch in der Höhenrichtung Y, je nach Ausgestaltung des Regalmoduls 12) direkt aneinander. Die Regalmodule 12 können eine oder mehrere Regalebenen aufweisen. Die Regalmodule können unterschiedlich viele Regalebenen aufweisen.

Jedes der Regalmodule 12-1 und 12-2 weist im Bereich der Regalgasse 16 einen Wartungsgang 32 auf. Dies bedeutet, dass in der Regalgasse 16 die zwei Wartungsgänge 32-1 und 32-2 vertikal übereinander angeordnet sind.

Jeder der Wartungsgänge 32 ist zum automatischen Betreiben von einem oder mehreren Regalbediengeräten 24 eingerichtet. Dies bedeutet, dass die Wartungsgänge 32 Sicherheitsstandards erfüllen, wie z.B. (video- und sensor-)überwacht sind, um den Zutritt des Wartungstechnikers feststellen zu können, um so ggf. eine Notabschaltung über eine Sicherheitssteuerung 44 einleiten zu können, die ebenfalls eine Komponente der Regalanlage 10 sein kann.

Die Wartungsgänge 32 sind ferner für eine manuelle Wartung der Regalbediengeräte 24 und zur Störungsbeseitigung eingerichtet. Dies bedeutet, dass z.B. Böden in die Regalgasse 16 eingezogen sind, um die Regalmodule 12 (unabhängig voneinander) begehbar zu machen.

Die Regalbediengeräte 24 selbst sind optionale Komponenten der Regalanlage 10 und können von anderen Anbietern als dem Regalanbieter bereitgestellt werden.

Innerhalb von zumindest einem der Regale 14-1 und 14-2 ist ein regalintegrierter (regalfachloser) Fluchtkanal 26 vorgesehen, der die Wartungsgänge 32 direkt mit der Außenwelt der Regalanlage 10 verbindet und der eingerichtet ist, vom Wartungstechniker durchquert zu werden. Dies bedeutet, dass der Fluchtkanal 26 ausreichend groß ist, dass der Wartungstechniker hindurch passt.

In der Fig. 4 ist der Fluchtkanal 26 exemplarisch im ersten Regal 14-1 vorgesehen. Der Fluchtkanal 26 kann ergänzend oder alternativ auch im zweiten Kanal 14-2 vorgesehen sein. In jedem Regal 14 können mehrere Fluchtkanäle 26 unabhängig voneinander vorgesehen sein.

Der Fluchtkanal 26 kann aus Fluchtschächten 28 und/oder aus Fluchtgängen 34 gebildet werden.

Die Verbindung zwischen dem Fluchtkanal 26 und den Wartungsgängen 32 kann über eine oder mehrere Türen 42 erfolgen. Die Türen 42 sind jedoch optional.

Die Türen 42 sind zwingend, wenn das oder die Regalbediengeräte 24 entlang von (Führungs-) Schienen 48 bewegt werden, die nicht (mittig) am Boden und/oder an der Decke des Wartungsgangs 32 sondern seitlich an den Regalfächern 20 befestigt sind. Der Zugang zu den Fluchtkanälen 26 erfolgt generell aus dem Wartungsgang 32 in der Querrichtung Z in die Regale 14 hinein.

Die Anzahl und Relativpositionierung der Fluchtkanäle 26 in den Regalen 14 hängt insbesondere von der Länge L_{G} der Regalgasse 16 und von der Positionierung der Heber 18 ab. Wenn der Eingang und/oder der Ausgang der Regalgasse 16 durch einen (regalexternen) Heber 18 versperrt ist, werden mehr regalintegrierten Fluchtkanäle 26 benötigt. Die regalexternen Heber 18 stellen optionale Komponenten der Regalanlage 10 dar.

Die Anzahl der Fluchtkanäle 26 hängt aber nicht davon ab, ob regalintegrierte Heber 18 vorhanden sind. Auch die Anzahl der regalintegrierten Heber 18 spielt keine Rolle. Die regalintegrierten Heber 18 haben lediglich einen Einfluss darauf, wie der Fluchtkanal 26 durch das entsprechende Regal 14 verläuft, da die regalintegrierten Heber 18 in der Längsrichtung X üblicherweise nicht von einem Fluchtgang 34 gequert werden können. Wenn jedoch die Lagereinheiten 22 mehrfach tief in den Regalfächern 20 gelagert werden, kann in der Tiefe der Regale 14 (d.h. in der Querrichtung Z) auch im Bereich der regalintegrierten Heber 18 ggf. ausreichend Raum vorhanden sein, um den Wartungstechniker horizontal und/oder vertikal hinter dem regalintegrierten Heber 18 vorbeizuführen. Dies hängt von der konkreten Konfiguration der Regale 14 und dem regalintegrierten Heber 18 ab.

Fig. 5 zeigt eine perspektivische Teilansicht eines Wartungsgangs 32. In der Fig. 5 ist insbesondere eine Tür 42 gezeigt, die sich in das Regal 14 hinein öffnen lässt. Ferner sind in der Fig. 5 Bodenelemente 46 und Schienen 48 zur seitlichen Zwangsführung von (nicht dargestellten exemplarischen) Einebenen-Regalbediengeräten (Shuttle) 24 gezeigt. In der Fig. 5 sind sechs Schienen 48 in der Höhenrichtung Y übereinander gezeigt. Die oberste Schiene 48 ist durchgehend ausgebildet. Die unteren fünf Schienen 48 sind im Bereich der Tür 42 unterbrochen. Teilabschnitte 50 der Schienen 48 sind an der Tür 42 befestigt. Die Teilabschnitte 50 sind so dimensioniert und angeordnet, dass die unterbrochenen Schienen 48 in einer geschlossenen Stellung der Tür 42 nahezu unterbrechungsfrei ausgebildet sind. Es versteht sich, dass in den Endbereichen der Teilabschnitte 50 kleine Spalten relativ zu den restlichen Schienen 48 vorhanden sein können. Dies stört die Shuttle beim Passieren der Tür 42 aber nicht.

Die Tür 42 verbindet den Wartungsgang 32 in der Querrichtung Z der Regalanlage 10 mit einem regalfachlosen Bereich des Regals 14. Die hier exemplarisch gitterförmig ausgebildeten Bodenelemente 46 sind nicht nur im Bereich der Regalgasse 16 bzw. des Wartungsgangs 32 vorgesehen, sondern auch innerhalb des Regals 14. Die Bodenelemente 46 innerhalb des Regals 14 können sich auch (in der Längsrichtung X) seitlich erstrecken, um dem Wartungstechniker ausreichend Raum zum Öffnen und Schließen der Tür 42 zu geben, bevor der Wartungstechniker den Wartungsgang 32 betritt. Im Fluchtfall kann der Wartungstechniker entweder über den Fluchtschacht 28 auf- oder absteigen, der sich z.B. hinter der Tür befindet. Alternativ kann der Wartungstechniker auch seitlich über einen regalintegrierten Fluchtgang 34 flüchten, der in der Fig. 5 horizontal nach rechts führt.

Die in der Fig. 5 gezeigte Tür 42 umfasst neben den Teilabschnitten 50 eine aus einem Gitter gebildetes Türblatt, das um eine Vertikalachse schwenkbar gelagert ist.

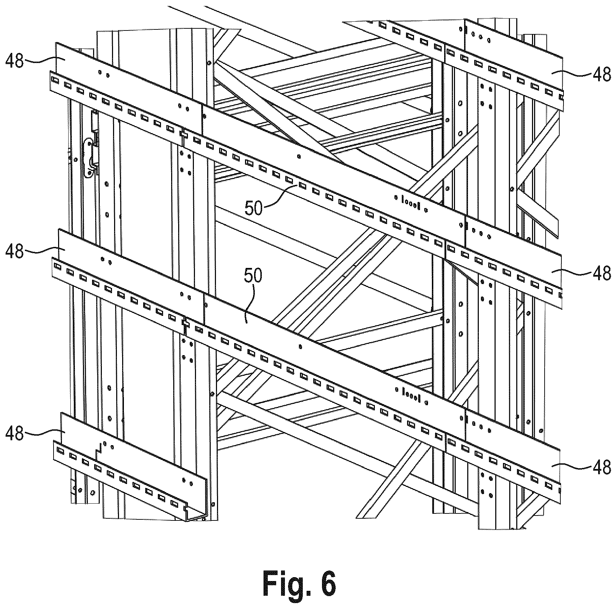

Alternativ kann die Tür auch allein durch die Teilabschnitte 50 gebildet werden, wie es exemplarisch in Fig. 6 angedeutet ist. In der Fig. 6 sind die Teilabschnitte 50 lose in Aufnahmeelemente eingelegt, die im Bereich der Enden der restlichen Schienen 48 angeordnet sind. Die Aufnahmeelemente sind zum formschlüssigen Aufnehmen der Teilabschnitte 50 eingerichtet. In diesem Fall werden die Teilabschnitte 50 manuell vom Wartungstechniker eingesetzt oder entnommen. Die Entnahme erfolgt sequentiell. Eine derartige Ausgestaltung der Tür 42 eignet sich besonders für Fluchtwege, die eigentlich nicht benutzt werden sollen und nur zum Erhöhen der Sicherheit vorgesehen sind, weil ausreichend andere Fluchtwege vorhanden sind.

Es versteht sich, dass die Türen 42 alternativ auch als Schiebetüren oder Klapptüren ausgebildet sein können.

Wenn das Regalbediengerät 24 als Mehrebenen-Regalbediengerät ausgebildet ist, das entlang von Schienen geführt wird, die im Boden- und Deckenbereich des Wartungsgangs 32 angeordnet sind, kann auf die Türen 42 vollständig verzichtet werden. In diesem Fall sind die Fluchtkanäle 26 über Öffnungen in der seitlichen Regalfläche zugänglich.

Ferner versteht es sich, dass Sicherheitssensoren im Bereich der Türen 42 vorgesehen werden können, um zu überwachen, ob eine entsprechende Tür sich in einer geöffneten oder geschlossenen Stellung befindet. Diese Information ist für die Sicherheitssteuerung 44 relevant. Wenn sich die Tür 42 in der geöffneten Stellung befindet, müssen die Regalbediengeräte 24 des zugehörigen Wartungsgangs definitiv ausgeschaltet sein.

### Bezugszeichenliste

- 10: Regalanlage
- 12: Regalmodul
- 14: Regal
- 16: Regalgasse
- 18: Heber
- 20: Regalfach
- 22: Lagereinheiten
- 24: Regalbediengerät
- 26: Fluchtkanal
- 28: Fluchtschacht
- 30: Leiter
- 32: Wartungsgang
- 34: Fluchtgang
- 36: Treppenturm
- 38: Verbindungssteg
- 40: Leiter
- 42: Tür
- 44: Sicherheitssteuerung
- 46: Bodenelement
- 48: Schiene
- 50: Teilabschnitt von 48

## Patentansprüche

1. Regalanlage (10), die aufweist:
mindestens zwei Regalmodule (12), die in einer Höhenrichtung (Y) der Regalanlage (10) direkt aneinandergrenzen;
wobei die Regalmodule (12) aus zwei Regalen (14) gebildet sind, die
in einer Längsrichtung (X) der Regalanlage (10) parallel zueinander ausgerichtet sind und in einer Querrichtung (Z) der Regalanlage (10) beabstandet zueinander angeordnet sind, um so eine Regalgasse (16) zwischen sich zu definieren, und
eine Vielzahl von Regalfächern (20) aufweisen, die direkt aneinandergrenzen;
wobei jedes der Regalmodule (12) im Bereich der Regalgasse (16) einen Wartungsgang (32) aufweist, der zum automatischen Betreiben und zum manuellen Warten von mindestens einem Regalbediengerät (24) eingerichtet ist;
wobei innerhalb von zumindest einem der Regale (14) ein regalintegrierter Fluchtkanal (26) vorgesehen ist, um die Wartungsgänge (32) direkt mit einer Au-ßenwelt der Regalanlage (10) zu verbinden, und wobei der Fluchtkanal (26) eingerichtet ist, von einem Wartungstechniker passiert zu werden; und
wobei der Fluchtkanal (26) einen Fluchtschacht (28) umfasst, der sich in der Höhenrichtung (Y) durch das zumindest eine der Regale (14) erstreckt und der die Regalmodule (12) in der Höhenrichtung (Y) regalfachlos miteinander verbindet.

2. Regalanlage (10) nach Anspruch 1, wobei der Fluchtkanal (26) ausschließlich durch den Fluchtschacht (28) definiert ist, der an einem Längsende des zumindest einen der Regale (14) angeordnet ist und der auf einem Fluchtniveau in der Längsrichtung (X) oder in der Querrichtung (Z) direkt mit der Außenwelt verbunden ist.

3. Regalanlage (10) nach Anspruch 1, wobei der Fluchtschacht (28) entfernt zu einem Längsende des zumindest einen der Regale (14) angeordnet ist.

4. Regalanlage (10) nach Anspruch 3, wobei der Fluchtkanal (26) ausschließlich durch den Fluchtschacht (28) definiert ist, der auf einem Fluchtniveau in der Querrichtung (Z) direkt mit der Außenwelt verbunden ist.

5. Regalanlage (10) nach Anspruch 3, wobei der Fluchtkanal (26) ferner einen Fluchtgang (34) umfasst, der sich auf einem Fluchtniveau in der Längsrichtung (X) zwischen dem Fluchtschacht (28) und der Außenwelt erstreckt und der den Fluchtkanal (26) in der Längsrichtung (X) mit der Außenwelt verbindet.

6. Regalanlage (10), die aufweist:
mindestens zwei Regalmodule (12), die in einer Höhenrichtung (Y) der Regalanlage (10) direkt aneinandergrenzen;
wobei die Regalmodule (12) aus zwei Regalen (14) gebildet sind, die
in einer Längsrichtung (X) der Regalanlage (10) parallel zueinander ausgerichtet sind und in einer Querrichtung (Z) der Regalanlage (10) beabstandet zueinander angeordnet sind, um so eine Regalgasse (16) zwischen sich zu definieren, und
eine Vielzahl von Regalfächern (20) aufweisen, die direkt aneinandergrenzen;
wobei jedes der Regalmodule (12) im Bereich der Regalgasse (16) einen Wartungsgang (32) aufweist, der zum automatischen Betreiben und zum manuellen Warten von mindestens einem Regalbediengerät (24) eingerichtet ist;
wobei innerhalb von zumindest einem der Regale (14) ein regalintegrierter Fluchtkanal (26) vorgesehen ist, um die Wartungsgänge (32) direkt mit einer Au-βenwelt der Regalanlage (10) zu verbinden, und wobei der Fluchtkanal (26) eingerichtet ist, von einem Wartungstechniker passiert zu werden;
wobei der Fluchtkanal (26) in dem zumindest einen der Regale (14) ausschließlich Fluchtgänge (34) umfasst, die sich in der Längsrichtung (X) erstrecken und die den jeweiligen Wartungsgang (32) direkt mit der Außenwelt verbinden; und
wobei die Regalanlage (10) ferner einen Treppenturm (36) umfasst, der in der Längsrichtung (X) entweder direkt, oder indirekt über einen Verbindungssteg (38), an das zumindest eine der Regale (14) gekoppelt ist, so dass die Fluchtgänge (34) in der Höhenrichtung (Y) miteinander verbunden sind.

7. Regalanlage (10) nach einem der vorgehenden Ansprüche, wobei das mindestens eine Regalbediengerät (24) eine Vielzahl von Shuttle umfasst, die entlang von Schienen (48), in der Längsrichtung (x) geführt, beweglich sind, wobei die Schienen (48) im Wartungsgang (32) in der Höhenrichtung (Y) übereinander und in der Querrichtung (Z) auf beiden Seiten an den Regalfächern (20) angebracht sind und sich in der Längsrichtung (X) in der Regalgasse (16) erstrecken, und wobei der Fluchtkanal (26) über eine Tür (42), die Teilabschnitte (50) der Schienen (48) umfasst, mit dem Wartungsgang (32) verbunden ist.

8. Regalanlage (10) nach Anspruch 7, wobei die Tür (42):
ausschließlich aus den Teilabschnitten (50) besteht, die manuell entfernbar in ein Endstücken der jeweiligen Schiene (48) lagerbar sind;
in der Längsrichtung (X) verschieblich gelagert ist; oder
um eine Schwenkachse, die sich entlang der Höhenrichtung (Y) oder der Längsrichtung (X) erstreckt, drehbar gelagert ist.

9. Regalanlage (10) nach Anspruch 7 oder 8, wobei die Tür (42) in einer geschlossenen Stellung, in welcher die Shuttle an der Tür (42) vorbeifahren können, arretierbar ist.

10. Regalanlage (10) nach einem der Ansprüche 7 bis 9, wobei ein Sensor vorgesehen ist, der eine Stellung der Tür (42) überwacht und der ein Signal an eine Sicherheitssteuerung (44) ausgibt, wenn sich die Tür (42) in einer geöffneten Stellung befindet, wobei die Sicherheitssteuerung (44) eingerichtet ist, die Shuttle in dem zugehörigen Wartungsgang (32) zu deaktivieren, sobald das Signal empfangen wird.

11. Regalanlage (10) nach einem der vorhergehenden Ansprüche, wobei die Regalgasse (16) länger als eine zulässige Maximalfluchtweglänge ist.

12. Regalanlage (10) nach Anspruch 11, wobei die zulässige Maximalfluchtweglänge 50m ist.

13. Regalanlage (10) nach einem der vorhergehenden Ansprüche, wobei an einem Ende, oder jeweils an beiden Enden, der Regalgasse (16) direkt ein regalexterner Heber (18) angeordnet ist, so dass Lagereinheiten (LE) und/oder das zumindest eine Regalbediengerät (24) in der Höhenrichtung (Y) zwischen den Regalmodulen (12) transportierbar sind.

14. Regalanlage (10) nach einem der vorhergehenden Ansprüche, wobei in einem oder beiden der Regale (14) zumindest ein regalintegrierter Heber (18) vorgesehen ist.

## Claims

1. A rack system (10) comprising:
at least two rack modules (12) directly adjacent to each other in a height direction (Y) of the rack system (10);
wherein the rack modules (12) are formed of two racks (14), which
are aligned parallel to each other in a longitudinal direction (X) of the rack system (10) and spaced apart from each other in a transverse direction (Z) of the rack system (10) for defining a rack aisle (16) between them, and
comprise a plurality of rack compartments (20), which are directly adjacent to each other;
wherein each of the rack modules (12) comprises, in an area of the rack aisle (16), a maintenance aisle (32) configured for automatically operating and manually maintaining at least one storage and retrieval device (24);
wherein, within at least one of the racks (14), a rack-integrated escape channel (26) is provided for connecting the maintenance aisles (32) directly to an outside world of the rack system (10), and wherein the escape channel (26) is configured to be passed by a maintenance technician; and
wherein the escape channel (26) includes an escape shaft (28) extending in the height direction (Y) through the at least one of the racks (14) and connecting to each other the rack modules (12) in the height direction (Y) in a compartmentless manner.

2. The rack system (10) of claim 1, wherein the escape channel (26) is defined exclusively by the escape shaft (28) being arranged at a longitudinal end of the at least one of the racks (14), and being connected directly to the outside world at an escape level in the longitudinal direction (X) or in the transverse direction (Z).

3. The rack system (10) of claim 1, wherein the escape shaft (28) is arranged remote to a longitudinal end of the at least one of the racks (14).

4. The rack system (10) of claim 3, wherein the escape channel (26) is defined exclusively by the escape shaft (28) being connected directly to the outside world at escape level in the transverse direction (Z).

5. The rack system (10) of claim 3, wherein the escape channel (26) further includes an escape aisle (34) extending, at the escape level, in the longitudinal direction (X) between the escape shaft (28) and the outside world, and connecting the escape channel (26) in the longitudinal direction (X) to the outside world.

6. A rack system (10) comprising:
at least two rack modules (12) directly adjacent to each other in a height direction (Y) of the rack system (10);
wherein the rack modules (12) are formed of two racks (14), which
are aligned parallel to each other in a longitudinal direction (X) of the rack system (10) and spaced apart from each other in a transverse direction (Z) of the rack system (10) for defining a rack aisle (16) between them, and
comprise a plurality of rack compartments (20), which are directly adjacent to each other;
wherein each of the rack modules (12) comprises, in an area of the rack aisle (16), a maintenance aisle (32) configured for automatically operating and manually maintaining at least one storage and retrieval device (24);
wherein, within at least one of the racks (14), a rack-integrated escape channel (26) is provided for connecting the maintenance aisles (32) directly to an outside world of the rack system (10), and wherein the escape channel (26) is configured to be passed by a maintenance technician;
wherein the escape channel (26) includes, in the at least one of the racks (14), escape aisles (34) only, which extend in the longitudinal direction (X) and connect the respective maintenance aisle (32) directly to the outside world; and
wherein the rack system (10) further includes a stair tower (36) being coupled to the at least one of the racks (14) in the longitudinal direction (X) either directly, or indirectly via a connecting bridge (38), so that the escape aisles (34) are connected to each other in the height direction (Y).

7. The rack system (10) of any of the proceeding claims, wherein the at least one storage and retrieval device (24) includes a plurality of shuttles being movable along rails (48), guided in the longitudinal direction (x), wherein the rails (48) are attached to the rack compartments (20) in the maintenance aisle (32) in the height direction (Y) on top of each other and in the transverse direction (Z) at both sides, and extend in the longitudinal direction (X) in the rack aisle (16), and wherein the escape channel (26) is connected to the maintenance aisle (32) via a door (42), which includes subsections (50) of the rails (48).

8. The rack system (10) of claim 7, wherein the door (42):
consists exclusively of the subsections (50), which are supportable in end pieces of the respective rail (48) in a manually removable manner;
is slidably supported in the longitudinal direction (X); or
is rotatably supported about a pivot axis extending along the height direction (Y) or the longitudinal direction (X).

9. The rack system (10) of claim 7 or 8, wherein the door (42) is lockable in a closed position, in which the shuttles can pass the door (42).

10. The rack system (10) of any of claims 7 to 9, wherein a sensor is provided, which monitors a position of the door (42) and outputs a signal to a safety controller (44) when the door (42) is in an open position, wherein the safety controller (44) is configured to deactivate the shuttles within the associated maintenance aisle (32) as soon as the signal is received.

11. The rack system (10) of any of the proceeding claims, wherein the rack aisle (16) is longer than a permissible maximum escape-route length.

12. The rack system (10) of claim 11, wherein the permissible maximum escape-route length is 50 meters.

13. The rack system (10) of any of the proceeding claims, wherein at one end, or respectively at both ends, of the rack aisle (16) a rack-external lifter (18) is arranged directly so that storage units (SU) and/or the at least one storage and retrieval device (24) are transportable in the height direction (Y) between the rack modules (12).

14. The rack system (10) of any of the proceeding claims, wherein at least one rack-integrated lifter (18) is provided in one or both of the racks (14).

## Revendications

1. Installation de rayonnage (10) qui présente :
au moins deux modules de rayonnage (12) qui sont directement adjacents dans une direction de la hauteur (Y) de l'installation de rayonnage (10) ;
dans laquelle les modules de rayonnage (12) sont formés à partir de deux rayons (14) qui
sont orientés parallèlement l'un à l'autre dans une direction longitudinale (X) de l'installation de rayonnage (10) et sont disposés à distance l'un de l'autre dans une direction transversale (Z) de l'installation de rayonnage (10), afin de définir entre eux une allée entre les rayons (16), et
présentent une pluralité de compartiments de rayonnage (20) directement adjacents ;
dans laquelle chacun des modules de rayonnage (12) présente, dans la zone de l'allée entre les rayons (16), un couloir d'entretien (32) qui est conçu pour le fonctionnement automatique et l'entretien manuel d'au moins un appareil de desserte de rayons (24) ;
dans laquelle, à l'intérieur d'au moins l'un des rayons (14), un canal d'évacuation (26) intégré au rayon est prévu pour relier directement les couloirs d'entretien (32) à un environnement extérieur de l'installation de rayonnage (10), et dans laquelle le canal d'évacuation (26) est conçu pour être traversé par un technicien d'entretien ; et
dans laquelle le canal d'évacuation (26) comprend une cage d'évacuation (28) qui s'étend dans la direction de la hauteur (Y) à travers l'au moins un des rayons (14) et qui relie les modules de rayonnage (12) entre eux sans compartiment de rayonnage dans la direction de la hauteur (Y).

2. Installation de rayonnage (10) selon la revendication 1, dans laquelle le canal d'évacuation (26) est défini exclusivement par la cage d'évacuation (28) qui est disposée à une extrémité longitudinale de l'au moins un des rayons (14) et qui est directement reliée à l'environnement extérieur à un niveau d'évacuation dans la direction longitudinale (X) ou dans la direction transversale (Z).

3. Installation de rayonnage (10) selon la revendication 1, dans laquelle la cage d'évacuation (28) est disposée à distance d'une extrémité longitudinale de l'au moins un des rayons (14).

4. Installation de rayonnage (10) selon la revendication 3, dans laquelle le canal d'évacuation (26) est défini exclusivement par la cage d'évacuation (28) qui est directement reliée à l'environnement extérieur à un niveau d'évacuation dans la direction transversale (Z).

5. Installation de rayonnage (10) selon la revendication 3, dans laquelle le canal d'évacuation (26) comprend en outre un couloir d'évacuation (34) qui s'étend à un niveau d'évacuation dans la direction longitudinale (X) entre la cage d'évacuation (28) et l'environnement extérieur et qui relie le canal d'évacuation (26) à l'environnement extérieur dans la direction longitudinale (X).

6. Installation de rayonnage (10) qui présente :
au moins deux modules de rayonnage (12) qui sont directement adjacents dans une direction de la hauteur (Y) de l'installation de rayonnage (10) ;
dans laquelle les modules de rayonnage (12) sont formés à partir de deux rayons (14) qui
sont orientés parallèlement l'un à l'autre dans une direction longitudinale (X) de l'installation de rayonnage (10) et sont disposés à distance l'un de l'autre dans une direction transversale (Z) de l'installation de rayonnage (10), afin de définir entre eux une allée entre les rayons (16), et
présentent une pluralité de compartiments de rayonnage (20) directement adjacents ;
dans laquelle chacun des modules de rayonnage (12) présente, dans la zone de l'allée entre les rayons (16), un couloir d'entretien (32) qui est conçu pour le fonctionnement automatique et l'entretien manuel d'au moins un appareil de desserte de rayons (24) ;
dans laquelle, à l'intérieur d'au moins l'un des rayons (14), un canal d'évacuation (26) intégré au rayon est prévu pour relier directement les couloirs d'entretien (32) à un environnement extérieur de l'installation de rayonnage (10), et dans laquelle le canal d'évacuation (26) est conçu pour être traversé par un technicien d'entretien ;
dans laquelle le canal d'évacuation (26) dans l'au moins un des rayons (14) comprend exclusivement des couloirs d'évacuation (34) qui s'étendent dans la direction longitudinale (X) et qui relient directement le couloir d'entretien (32) respectif à l'environnement extérieur ; et
dans laquelle l'installation de rayonnage (10) comprend en outre une tour d'escalier (36) qui est accouplée dans la direction longitudinale (X) soit directement, soit indirectement par l'intermédiaire d'une entretoise de liaison (38), à l'au moins un des rayons (14), de sorte que les couloirs d'évacuation (34) sont reliés entre eux dans la direction de la hauteur (Y).

7. Installation de rayonnage (10) selon l'une des revendications précédentes, dans laquelle l'au moins un appareil de desserte de rayons (24) comprend une pluralité de navettes qui sont mobiles le long de rails (48) en étant guidées dans la direction longitudinale (x), dans laquelle les rails (48) sont montés dans le couloir d'entretien (32) les uns au-dessus des autres dans la direction de la hauteur (Y) et des deux côtés sur les compartiments de rayonnage (20) dans la direction transversale (Z) et s'étendent dans l'allée entre les rayons (16) dans la direction longitudinale (X), et dans laquelle le canal d'évacuation (26) est relié au couloir d'entretien (32) par l'intermédiaire d'une porte (42) qui comprend des sections partielles (50) des rails (48).

8. Installation de rayonnage (10) selon la revendication 7, dans laquelle la porte (42) :
est constituée exclusivement des sections partielles (50) qui peuvent être stockées de manière amovible manuellement dans une pièce d'extrémité du rail (48) respectif ;
est montée de manière à pouvoir coulisser dans la direction longitudinale (X) ; ou
est montée de manière à pouvoir tourner autour d'un axe de pivotement qui s'étend le long de la direction de la hauteur (Y) ou de la direction longitudinale (X).

9. Installation de rayonnage (10) selon la revendication 7 ou 8, dans laquelle la porte (42) peut être bloquée dans une position fermée dans laquelle les navettes peuvent passer devant la porte (42).

10. Installation de rayonnage (10) selon l'une des revendications 7 à 9, dans laquelle un capteur est prévu, lequel surveille une position de la porte (42) et émet un signal vers une commande de sécurité (44) lorsque la porte (42) se trouve dans une position ouverte, dans laquelle la commande de sécurité (44) est configurée pour désactiver la navette dans le couloir d'entretien (32) associé dès que le signal est reçu.

11. Installation de rayonnage (10) selon l'une des revendications précédentes, dans laquelle l'allée entre les rayons (16) est plus longue qu'une longueur de voie d'évacuation maximale autorisée.

12. Installation de rayonnage (10) selon la revendication 11, dans laquelle la longueur de voie d'évacuation maximale autorisée est de 50 m.

13. Installation de rayonnage (10) selon l'une des revendications précédentes, dans laquelle un élévateur (18) externe au rayon est disposé directement à une extrémité, ou respectivement aux deux extrémités, de l'allée entre les rayons (16), de sorte que des unités de stockage (LE) et/ou l'au moins un appareil de desserte de rayons (24) peuvent être transportés dans la direction de la hauteur (Y) entre les modules de rayonnage (12).

14. Installation de rayonnage (10) selon l'une des revendications précédentes, dans laquelle au moins un élévateur (18) intégré au rayon est prévu dans l'un des rayons (14) ou dans les deux rayons.
